# FASCICULE DE BREVET EUROPEEN

(11) **EP 0 384 792 B1**
(45) Date de publication et mention de la délivrance du brevet: **19.05.1993**
(21) Numéro de dépôt: 90400181.5
(22) Date de dépôt: 23.01.1990
(51) Int. Cl.: G01N 11/10, E21B 49/00

(54) **Procédé et cellule de mesure des coefficients d'adhérence et de frottement d'un fluide de forage**
Verfahren und Vorrichtung zur Messung der Viskositäts- und Adhäsionskoeffizienten einer Bohrflüssigkeit
Method and apparatus for measuring the coefficients of adhesion and viscosity of a drilling fluid

(30) Priorité: 09.02.1989 FR 8901688
(43) Date de publication de la demande: 29.08.1990
(73) Titulaire: TOTAL COMPAGNIE FRANCAISE DES PETROLES Société Anonyme, 75781 Paris Cédex 16 (FR)
(72) Inventeur: Fery, Jean-Jacques, F-55000 Bar-Le-Duc (FR); Patroni, Jean-Marc, F-91940 Les Ulis (FR)
(74) Mandataire: Jolly, Jean-Pierre

(56) Documents cités:
- US-A- 1 960 226
- US-A- 2 691 298
- US-A- 2 801 537
- US-A- 4 458 528
- WORLD OIL, vol. 183, no. 1, juillet 1976, pages 105-110; S.E. ALFORD: "New technique evaluates drilling mud lubricants"

## Description

L'invention concerne un procédé et une cellule de mesure pour fluide de forage permettant d'en déterminer les caractéristiques d'adhérence et de frottement en cours de forage.

On connaît par US-A-1 960 226 et en particulier par US-A-4 458 528 un procédé et un appareil de mesure des coefficients d'adhérence d'un fluide de forage dans lequel on fait une filtration normalisée du fluide ou boue de forage duquel on obtient une phase solide dite "gâteau de filtration" et une phase liquide ou filtrat que l'on recueille en aval du filtre ; on met ensuite en contact un piston mobile avec le gâteau de filtration en présence d'une pression d'application et on anime ce piston d'un mouvement de rotation. Le piston est d'un seul tenant.

On sait en outre que lors du forage d'un puits pétrolier géothermique ou minier, le fluide de forage encore appelé "boue de forage", voit son équilibre physico-chimique sans cesse modifié par l'évolution de ses composants. Les divers produits de charge (bentonite, polymères, etc..) subissent sans cesse des cisaillements violents, tant au niveau des pompes que des turbines ou des évents de l'outil, auxquels s'ajoute l'élévation de la température et de la pression. De plus, le maintien impératif d'une densité de fluide suffisante pour contre-balancer la pression de pore des formations forées impose en supplément un enrichissement de la teneur en solides par les charges de terrain ou l'ajout voulu de barytine. Dans ce contexte, les caractéristiques du fluide de forage changent fortement au fur et à mesure du forage avec pour conséquence une évolution des coefficients prépondérants dans le contact paroi de forage et garniture de l'outil de forage, tels que le coefficient d'adhérence sur garniture, le couple d'adhérence sur garniture, le couple de frottement sur garniture etc. Un mauvais contrôle de ces caractéristiques conduit à la réduction des performances en forage, par exemple, par une mauvaise transmission du poids sur l'outil en particulier dans le forage de puits déviés ou horizontaux et par un accroissement du couple qui nuit à une bonne rotation de la garniture et de l'outil, au coincement de la garniture et à des problèmes de parois en particulier dans le forage d'horizons argileux. De plus, les couches ou formations argileuses donnent souvent lieu à une augmentation brutale de la pression à opposer lors du forage. Cette pression est dite "pression anormale" et est due à l'addition à la pression hydrostatique de pore de la pression due au poids des couches de sédiments susjacentes.

L'un des buts du procédé et cellule de mesure selon l'invention est de permettre la mise au point ou l'optimisation des caractéristiques des fluides de forage avec des additifs spécifiques afin de réduire ou de supprimer les nombreux incidents liés aux frottement dans un forage, et en particulier le coincement ou collage de la garniture sur les parois, un mauvais contrôle du poids sur l'outil, un surdimensionnement des appareils de surface en raison de l'augmentation du couple sur la garniture etc..

Un autre but du procédé et cellule de mesure selon l'invention est d'anticiper sur les chantiers les problèmes susmentionnés en procédant de façon permanente à des mesures représentatives et fiables sur les fluides de forage utilisés. Pour cela, la cellule doit être solide et de dimensions réduites pour se placer dans une cabine de contrôle sur les chantiers de forage.

Aussi, il est proposé selon l'invention un procédé de mesure des caractéristiques d'un fluide de forage, consistant en ce que après filtration normalisée du fluide ou boue de forage duquel on a obtenu une phase solide dite "gâteau de filtration" et une phase liquide ou filtrat que l'on recueille en aval du filtre, à mettre en contact un disque métallique ou un piston mobile avec le gâteau de filtration en présence d'une pression d'application et à mesurer le couple d'adhérence et de frottement lorsque le disque ou piston est animé d'un mouvement de rotation axial perpendiculaire à la surface de contact, caractérisé en ce qu'il consiste à mesurer l'enfoncement du disque ou piston en fonction du temps, de la pression d'application et de la température parallèlement aux données classiques d'analyse du volume de filtrat, du film-boue, de l'épaisseur du gâteau de filtration, et la force d'extraction axiale ou d'adhérence de contact lorsque le disque ou piston en est retiré après un temps déterminé de mise en contact.

L'adhérence et le frottement sur le gâteau de filtration sont variables en fonction du type de boue et des additifs ainsi que des conditions opératoires telles que pression, température, géométrie de la surface de contact, temps de contact... Ils permettent après analyse et interprétation d'optimiser les caractéristiques de forage et de prévenir tout accident spécifique, tel que mentionné précédemment.

Ainsi, parallèlement aux données classiques d'analyse du volume de filtrat, du film boue, de l'épaisseur du gâteau de filtration, on intervient en profondeur sur la mécanique du gâteau de filtration en mesurant l'enfoncement du disque ou piston en fonction du temps, de la pression d'application et de la température.

Les résultats peuvent être analysés, interprétés et comparés aux résultats d'essais classiques de mécanique des sols afin d'étendre ces mesures de frottement et d'adhérence vers l'élaboration d'une théorie sur le mécanisme en jeu.

La cellule de mesure pour la mise en oeuvre du procédé selon l'invention comporte une enceinte ou boîte dont le corps est cylindrique, contenant en son fond un élément-filtre normalisé pour la filtration des fluides de forage contenus à l'intérieur, sur lequel se dépose la phase solide ou "gâteau de filtration" et au dessous duquel le filtrat est évacué et recueilli, la partie supérieure de la dite enceinte étant traversée axialement par la tige d'un piston contenu à l'intérieur et dont l'extrémité ou tête est en forme de T et est caractérisée en ce que l'extrémité du piston ou tête reçoit une jupe cylindrique, laquelle a une section en forme de C, de face inférieure plane, du diamètre du corps cylindrique de l'enceinte, solidaire en rotation de la tête du piston par crochetage et coulissant sans frottement dans l'enceinte, cette jupe étant apte à être animée sous la sollicitation de moyens moteurs agissant sur la tige de piston, respectivement, d'un mouvement de rotation et d'un mouvement de translation axiale à l'intérieur de l'enceinte, des éléments capteurs des couples de rotation et forces de translation étant en outre associés aux dits moyens moteurs.

Selon certaines caractéristiques de l'invention, ladite enceinte constitutive de la cellule de mesure est montée démontable solidaire d'un châssis portant lesdits moyens moteurs du piston. Elle comporte un corps cylindrique, une plaque de fond portant ledit élément filtre et rainurée radialement sur la face en contact avec l'élément filtrant avec un trou central pour l'écoulement et l'évacuation du filtrat recueilli, et une plaque supérieure support solidaire du châssis traversée de façon étanche par la tige dudit piston mobile.

Les moyens moteurs en translation du piston consistent en un vérin à vis avec des guidages de translation par paliers à roulement à billes glissant sur deux colonnes parallèles solidaires du châssis et encadrant la tige du piston mobile.

Le capteur de force en traction compression pour la mesure de l'adhérence de contact est placé sur l'arbre de liaison du piston avec le vérin à vis.

La rotation du piston est assurée par l'intermédiaire d'une crémaillère engrenant perpendiculairement sur une portion d'arbre dentée de la tige de piston et actionnée en déplacement par un vérin hydraulique à double effet.

Le capteur de couple est disposé à l'extrémité de la crémaillère entre cette dernière et le vérin hydraulique.

La pression d'application sur la jupe de piston mobile ou sur le disque résulte de l'actionnement du vérin à vis et de la pression du gaz au sein de l'enceinte, laquelle permet la filtration du fluide de forage d'amont en aval de l'élément-filtre.

L'invention est illustrée ci-après à l'aide d'un exemple de réalisation et en référence au dessin annexé sur lequel :
- La figure 1 montre une vue en coupe axiale d'une cellule de mesure selon l'invention et
- La figure 2 montre l'entraînement en rotation du piston mobile selon la ligne A-A de la figure 1.

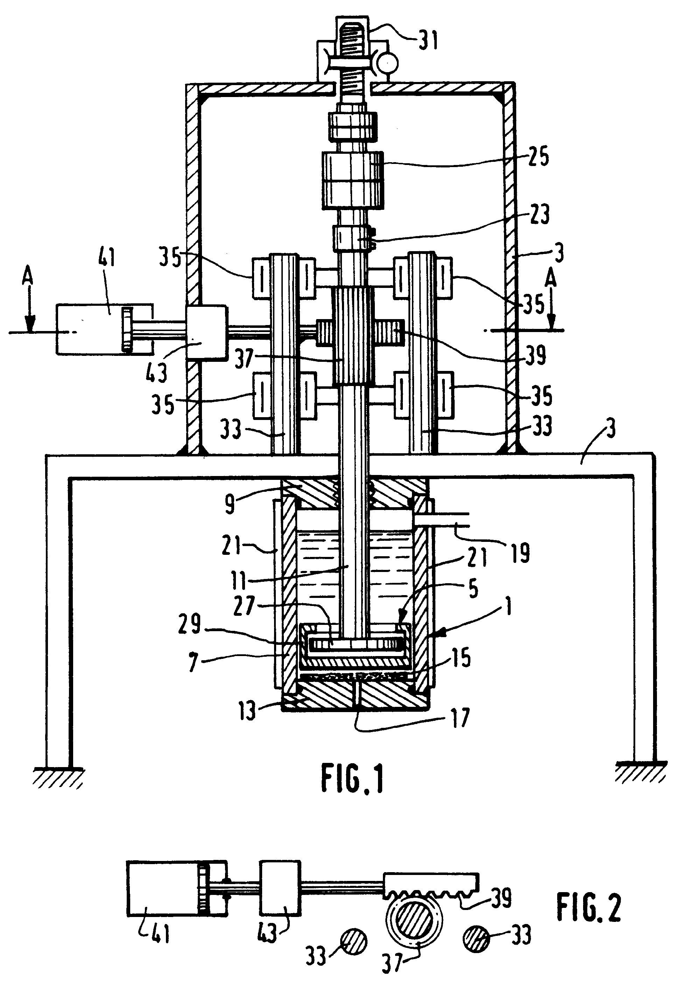

Comme représenté sur la figure 1, la cellule de mesure selon l'invention comprend une enceinte 1 en forme de boîte cylindrique solidaire d'un châssis porteur 3 et munie d'un piston mobile 5 à l'intérieur. L'enceinte 1 comporte un corps cylindrique 7 monté sur une plaque supérieure 9, laquelle est fixée au châssis porteur 3 et est traversée par la tige 11 du piston mobile 5, et une plaque de fond 13 portant un élément-filtre normalisé 15 (papier filtre ou disque métallique poreux) et convenablement rainurée radialement avec un trou central 17 pour l'évacuation du filtrat. Un joint métallique et un joint torique souple assure de façon classique l'étanchéité respectivement sur la circonférence de l'élément filtre et entre la plaque de fond et le corps cylindrique. Au niveau supérieur, un joint torique souple et un joint à chevrons assurent l'étanchéité respectivement entre la plaque supérieure et le corps cylindrique et au passage de la tige de piston dans la plaque supérieure. L'assemblage de la boîte est réalisé à l'aide de trois vis à 120° appliquées sur la plaque de fond.

Une arrivée de gaz azote 19 alimente l'enceinte sensiblement au niveau de sa partie supérieure et la met en pression jusqu'à une valeur de 4 MPa.

Des colliers chauffants 21 sont montés extérieurement sur le corps cylindrique 7 de l'enceinte la portant à une température jusqu'à 150°C.

Un refroidisseur à eau 23 est en outre prévu pour réduire le transfert de chaleur par conduction sur la tige de piston jusqu'au capteur de traction-compression 25.

La tête de piston 27 a une section en forme de T et la jupe complémentaire 29 une section en C, de face inférieure plane, du diamètre du corps cylindrique de l'enceinte. Cette jupe 29 est solidaire en translation au jeu près et en rotation (par crochetage) à la tête 27 de piston. Le piston 5 est entraîné en coulissement axial (sans frottement sur le corps cylindrique) par un vérin à vis 31 disposé solidairement au châssis 3 à l'extrémité supérieure de la tige de piston. Cette dernière est guidée axialement par l'intermédiaire de deux colonnes 33 fixées au châssis et sur lesquelles glissent 4 paliers 35 à roulements à billes convenablement reliées sur deux niveaux deux à deux à la tige 11 de piston. La longueur de tige 37 comprise entre les deux niveaux de paliers 35 est dentée circulairement et engrène sur une crémaillère 39 actionnée perpendiculairement en translation à son extrémité et réversiblement par un vérin hydraulique à double effet 41. Cette crémaillère 39 est guidée sur une coulisse fixée (non représentée) et se déplace de gauche à droite et inversement selon le mouvement du vérin. Un premier capteur de force pour la mesure du couple 43 est interposé entre ce vérin et la crémaillère, tandis que le second de traction-compression 25 est disposé sur l'arbre de liaison entre la tige du piston mobile et le vérin à vis.

Le fonctionnement de la cellule ressort de la description précédente. Après avoir démonté l'enceinte de sa plaque support supérieure 9, elle est remplie de fluide ou boue de forage puis remontée serrée par les trois vis de fixation sur la plaque de fond. L'enceinte est alors mise en pression par l'arrivée de gaz. Le fluide de forage sous l'effet de la pression différentielle de part et d'autre de l'élément filtre se met à filtrer et le dépôt sur l'élément-filtre constitue le gâteau de filtration. Après un temps de filtration déterminé, la face plane inférieure de la jupe 29 est mise en contact avec le gâteau par commande dudit piston 5. La mise en contact de cette face avec le gâteau est détectée par le capteur de force 25 de tige de piston. La force de pénétration de la jupe dans le gâteau (compression) est lue par le capteur. A ce moment, la jupe de piston, du fait de son isolement en partie inférieure par le gâteau de filtration, n'est plus en équipression sur toute sa surface. Le bilan des forces (pression de gaz) sur cette plaque conduit à une résultante verticale dirigée vers le bas qui favorise l'enfoncement de la jupe dans le gâteau. La valeur de pénétration en fonction du temps peut être mesurée.

Après une période de temps déterminée, trois types de paramètres peuvent être mesurés.

En premier lieu, il s'agit de mesurer la force d'arrachement perpendiculaire à la surface de contact de la jupe sur le gâteau. On remonte alors le piston grâce au vérin à vis 31 jusqu'à la rupture du contact (détectée par le capteur 25) de la jupe avec le gâteau. Cette valeur de traction est lue sur le capteur et enregistrée. La valeur maximale est de 2000 daN avec une précision de 0,2%.

En second lieu, on peut mesurer la valeur du couple de rupture de contact tournant ou couple d'adhérence. Il s'agit donc de faire tourner la tige 11 de piston et donc la jupe sur le gâteau. Ceci est effectué par commande du vérin hydraulique qui actionne la crémaillère. La rupture du contact est détectée par le capteur en bout de crémaillère; cette valeur est lue et enregistrée grâce au système de traitement électronique associé qui est muni d'un détecteur de crête. Le capteur possède une étendue de mesure de 1000 daN avec une précision de 0,3%, ce qui, compte tenu du bras de levier de 10cm conduit à un couple maximal de 100 daN.m.

En dernier lieu, le couple de frottement peut être mesuré. Il s'agit d'alimenter le vérin hydraulique par une pompe à débit constant, ce qui donnera à la jupe une vitesse angulaire de rotation constante. On peut donc évaluer en fonction de la vitesse de rotation, le couple de frottement à la suite de la mesure de couple d'adhérence précédente.

Cette valeur permet de mieux apprécier, notamment, les frottements dynamiques de la garniture de forage sur les parois du puits qui augmentent la puissance nécessaire de transmission et s'opposent à l'avancement de l'outil.

On notera que les problèmes évoqués précédemment des pressions anormales rencontrées dans les couches ou formations argileuses peuvent également être mieux maîtrisés grâce à l'invention. On peut en effet étudier le comportement de ces formations argileuses en faisant des essais sur des gâteaux argileux compactés de nature prédéterminée (proche de celle supposée exister à l'endroit de forage), ces gâteaux étant par exemple contenus dans des pastilles de diamètre égal à celui de l'enceinte de mesure et montées dans le fond de l'enceinte en lieu et place du filtre ou au dessus. On peut également étudier la réactivité de ces gâteaux de nature déterminée à des boues de compositions données et examiner en particulier leur hydratation. On peut encore simuler les problèmes de collage de ces argiles sur les outils et garnitures de forage (conduisant aux phénomènes de bourrage des outils) par mesure de la pression d'application du disque sur le gâteau (pression de compactage) à laquelle on commence à apercevoir le collage de l'argile sur le disque à sa remontée.

## Revendications

1. Procédé de mesure des caractéristiques d'un fluide de forage, consistant en ce que après filtration normalisée du fluide ou boue de forage duquel on a obtenu une phase solide dite "gâteau de filtration" et une phase liquide ou filtrat que l'on recueille en aval du filtre (15), à mettre en contact un disque métallique ou un piston mobile (5) avec le gâteau de filtration en présence d'une pression d'application et à mesurer le couple d'adhérence et de frottement lorsque le disque ou piston (5) est animé d'un mouvement de rotation axial perpendiculaire à la surface de contact, caractérisé en ce qu'il consiste à mesurer l'enfoncement du disque ou piston (5) en fonction du temps, de la pression d'application et de la température parallèlement aux données classiques d'analyse du volume de filtrat, du film-boue, de l'épaisseur du gâteau de filtration, et la force d'extraction axiale ou d'adhérence de contact lorsque le disque ou piston (5) en est retiré après un temps déterminé de mise en contact.

2. Cellule de mesure pour la mise en oeuvre du procédé selon la revendication 1, comportant une enceinte ou boîte (1) dont le corps (7) est cylindrique, contenant en son fond un élément-filtre (15) normalisé pour la filtration des fluides de forage contenus à l'intérieur, sur lequel se dépose la phase solide ou "gâteau de filtration" et au dessous duquel le filtrat est évacué et recueilli, la partie supérieure (9) de la dite enceinte (1) étant traversée axialement par la tige (11) d'un piston (5) contenu à l'intérieur et dont l'extrémité ou tête (27) est en forme de T caractérisée en ce que l'extrémité du tête (27) reçoit une jupe cylindrique (29), laquelle a une section en forme de C, de face inférieure plane, du diamètre du corps cylindrique (7) de l'enceinte (1), solidaire en rotation de la tête du piston par crochetage et coulissant sans frottement dans l'enceinte (1), cette jupe (29) étant apte à être animée sous la sollicitation de moyens moteurs (39, 41; 31) agissant sur la tige (11) de piston, respectivement, d'un mouvement de rotation et d'un mouvement de translation axiale à l'intérieur de l'enceinte, des éléments capteurs des couples de rotation (43) et forces de translation (25) étant en outre associés aux dits moyens moteurs (39, 41; 31).

3. Cellule de mesure selon la revendication 2, caractérisée en ce que ladite enceinte (1) constitutive de la cellule de mesure est montée démontable solidaire d'un châssis (3) portant lesdits moyens moteurs (39, 41 ; 31) du piston (5).

4. Cellule de mesure selon l'une des revendications 2, 3, caractérisée en ce qu'elle comporte un corps cylindrique (7), une plaque de fond (13) portant ledit élément-filtre (15) et rainurée radialement sur la face en contact avec l'élément filtrant (15) avec un trou central (17) pour l'écoulement et l'évacuation du filtrat recueilli, et une plaque supérieure support (9) solidaire du châssis traversée de façon étanche par la tige (11) dudit piston mobile (5).

5. Cellule de mesure selon l'une des revendications 2 à 4, caractérisée en ce que les moyens moteurs en translation du piston (5) consistent en un vérin à vis (31) avec des guidages de translation par paliers à roulements à billes (35) glissant sur deux colonnes (33) parallèles solidaires du châssis et encadrant la tige (11) du piston mobile (5).

6. Cellule de mesure selon l'une des revendications 2 à 5, caractérisée en ce que le capteur de force en traction compression (25) pour la mesure de l'adhérence de contact est placé sur l'arbre de liaison du piston (5) avec le vérin à vis (31).

7. Cellule de mesure selon l'une des revendications 2 à 6, caractérisée en ce que la rotation du piston (5) est assurée par l'intermédiaire d'une crémaillère (39) engrenant perpendiculairement sur une portion d'arbre dentée (37) de tige de piston et actionnée en déplacement par un vérin hydraulique à double effet (41).

8. Cellule de mesure selon l'une des revendications 2 à 7, caractérisée en ce que le capteur de couple (43) est disposé à l'extrémité de la crémaillère (30) entre cette dernière et le vérin hydraulique (41).

9. Cellule de mesure selon l'une des revendications 2 à 8, caractérisée en ce que la pression d'application sur le disque ou la jupe (29) du piston mobile résulte de l'actionnement du moyen moteur de translation ou vérin à vis (31) et de la pression de gaz au sein de l'enceinte, laquelle permet également la filtration du fluide de forage d'amont en aval de l'élément-filtre (15).

10. Application de la cellule de mesure et du procédé selon l'une des revendications précédentes à l'étude du comportement au forage des formations de nature argileuse, dans la résolution des problèmes de pressions anormales, caractérisée en ce que l'on exploite les données d'essais sur des gâteaux argileux compactés de nature déterminée (proche de celle supposée exister à l'endroit du forage), ces gâteaux étant contenus dans des pastilles à monter dans le fond de l'enceinte de mesure en lieu et place du filtre rainuré ou au dessus, et en ce que l'on examine la réactivité chimique de ses gâteaux, en particulier leur hydratation, à des boues de compositions données.

11. Application de la cellule de mesure et du procédé selon l'une des revendications précédentes, caractérisée en ce qu'on simule les problèmes de collage des argiles sur les outils et garniture de forage par mesure de la pression d'application du disque sur le gâteau (pression de compactage) à laquelle on commence à apercevoir un collage de l'argile sur le disque à sa remontée.

## Patentansprüche

1. Verfahren zur Messung von Eigenschaften einer Bohrflüssigkeit, bei dem nach normalisierter Filtration der Bohrflüssigkeit oder des Bohrschlamms, aus der bzw. dem man eine den Filterkuchen bildende feste Phase und eine hinter dem Filter (15) aufgefangene flüssige Phase oder ein Filtrat gewonnen hat, einen beweglichen metallischen Teller oder Kolben (5) in Gegenwart eines Anwendungsdruckes mit dem Filterkuchen in Kontakt gebracht wird und bei Antrieb des Tellers oder Kolbens (5) zu einer axial senkrecht zur Kontaktfläche verlaufenden Drehbewegung das Adhäsisionsmoment sowie das Reibungsmoment gemessen werden,
**dadurch gekennzeichnet,**
daß das Eindringen des Teller oder Kolbens (5) in Abhängigkeit von der Zeit, vom Anwendungsdruck und von der Temperatur parallel zu herkömmlichen Analysewerten bezüglich Filtratvolumen, Schlammfilm, Filterkuchendicke sowie die axiale Abzieh- oder Haftkontaktkraft beim Zurückziehen des Tellers oder Kolbens (5) nach einer vorbestimmten Zeit ab Kontaktbeginn gemessen werden.

2. Meßzelle zur Durchführung des Verfahrens nach Anspruch 1, die eine Büchse oder Gefäß (1) mit zylindrischem Körper (7) und an dessen Boden ein zur Filtration von darin enthaltener Bohrflüssigkeiten normalisiertes Filterelement (15) umfaßt, auf dem sich die Feststoffphase oder der Filterkuchen absetzt und unterhalb dessen das Filtrat abgezogen und aufgefangen wird, wobei das Oberteil (9) des Gefäßes (1) von der Stange (11) eines im Gefäß befindlichen und an seinem Ende oder Kopf (27) T-förmigen Kolbens (5) durchsetzt ist,
**dadurch gekennzeichnet,**
daß auf dem Ende oder Kopf (27) ein zylindrischer, im Querschnitt C-förmiger Mantel (29) aufgenommen ist, der eine innere Planfläche aufweist, dem Durchmesser des zylindrischen Körpers (7) des Gefäßes (1) entspricht, mit dem Kopf des Kolbens durch Verhakung drehfest verbunden und innerhalb des Gefäßes reibungsfrei verschiebbar ist, so daß der Mantel (29) durch auf die Kolbenstange einwirkende Antriebsmittel (39, 41; 31) zu einer Drehbewegung und einer axialen Translationsbewegung innerhalb des Gefässes (1) veranlaßt wird, wobei den Antriebsmitteln (39, 41; 31) außerdem Meßaufnehmer (43 bzw. 25) für Drehmomente und Translationskräfte zugeordnet sind.

3. Meßzelle nach Anspruch 2, dadurch gekennzeichnet, daß das die Meßzelle bildende Gefäß (1) formschlüssig und abnehmbar mit einem Rahmen (3) verbunden ist, der die Antriebsmittel (39, 41; 31) für den Kolben (5) trägt.

4. Meßzelle nach Anspruch 2 oder 3, dadurch gekennzeichnet, daß sie einen zylindrischen Körper (7), eine das Filterelement (15) tragende Bodenplatte (13) mit radial verlaufenden Rillen oder Nuten auf der dem Filterelement (15) zugewandten Seite und mit einer mittleren Öffnung (17) zum Ablaufen und Abziehen des aufgefangenen Filtrates sowie eine obere Halteplatte (9) aufweist, die am Rahmen befestigt und von der Stange (11) des beweglichen Kolbens (5) abgedichtet durchquert ist.

5. Meßzelle nach einem der Ansprüche 2 bis 4, dadurch gekennzeichnet, daß die Antriebsmittel für die Längsbewegung des Kolbens (5) aus einem Schraubgewinde (31) und aus Längsführungen mit Kugellagern (35) bestehen, die auf zwei am Rahmen befestigten, zueinander parallelen und die Kolbenstange (11) zwischen sich einschließenden Säulen (33) gleiten.

6. Meßzelle nach einem der Ansprüche 2 bis 5, dadurch gekennzeichnet, daß der Zug- und Druckkraft-Meßaufnehmer (25) zur Messung der Haftkontaktkraft auf der Verbindungsstange zwischen dem Kolben (5) mit dem Schraubgewinde (31) angeordnet ist.

7. Meßzelle nach einem der Ansprüche 2 bis 6, dadurch gekennzeichnet, daß zur Drehung des Kolbens (5) eine Zahnstange (39) dient, die in einen verzahnten Abschnitt (37) der Kolbenstange senkrecht eingreift und durch einen doppeltwirkenden Hydraulikzylinder (41) verschiebbar angetrieben ist.

8. Meßzelle nach einem der Ansprüche 2 bis 7, dadurch gekennzeichnet, daß der Drehmoment-Meßaufnehmer (43) am Ende der Zahnstange (30) zwischen dieser und dem Hydraulikzylinder (41) angeordnet ist.

9. Meßzelle nach einem der Ansprüche 2 bis 8, dadurch gekennzeichnet, daß der Anwendungsdruck auf den Teller oder den Mantel (29) des beweglichen Kolbens aus der Wirkung der Längsantriebsmittel oder des Schraubgewindes (31) und aus einem Gasdruck im Innern des Gefäßes abgeleitet ist, der gleichermaßen die Filtration der Bohrflüssigkeit oberhalb und unterhalb des Filterelementes (15) ermöglicht.

10. Anwendung der Meßzelle und des Verfahrens nach einem der vorhergehenden Ansprüche zur Untersuchung des Verhaltens tonhaltiger Erdformationen beim Durchbohren zwecks Beseitigung abnormaler Druckproblemen, dadurch gekennzeichnet,
daß man die Untersuchungsdaten von tonhaltigen Kuchen auswertet, die auf ein vorbestimmtes (ähnlich dem im Bereich der Erdbohrung zu erwartenden) Maß verdichtet worden sind,
daß die Kuchen in Plättchen oder Pellets enthalten sind, die auf den Boden des Meßgefäßes anstelle des mit Rillen versehen Filters oder darüber gelegt werden,
und daß man die chemischen Reaktionseigenschaften dieser Kuchen, insbesondere ihre Hydratation gegenüber Bohrflüssigkeiten vorbestimmter Zusammensetzungen untersucht.

11. Anwendung der Meßzelle und des Verfahrens nach einem der vorhergehenden Ansprüche, dadurch gekennzeichnet, daß die Vorgänge des Verklebens von Tonen auf Bohreinrichtungen und -werkzeugen nachgebildet werden durch Messung des Anwendungsdruckes des Tellers auf den Kuchen (Verdichtungsdruck), bei dem man ein Verkleben des Tons auf dem Teller nach seinem Herausnehmen festzustellen beginnt.

## Claims

1. Method for measuring the characteristics of a drilling fluid, consisting, after standardised filtration of the drilling fluid or mud from which a solid phase called a "filter cake" and a liquid phase or filtrate which is gathered downstream of the filter (15) have been obtained, in putting a metal disc or moving piston (5) in contact with the filter cake in the presence of an application pressure and in measuring the adherence and friction torque when the disc or piston (5) is given an axial rotational movement perpendicular to the contact surface, characterised in that it consists in measuring the indentation of the disc or piston (5) as a function of time, of the application pressure and of the temperature in parallel with the conventional data for analysing the volume of the filtrate, of the mud film, of the thickness of the filter cake, and the axial extraction force or contact adherence when the disc or piston (5) is withdrawn therefrom after a specified contact time.

2. Measurement cell for implementing the method according to Claim 1, comprising an enclosure or box (1) whose body (7) is cylindrical, containing, at its bottom, a standardised filter element (15) for filtering drilling fluids contained inside, on which filter element the solid phase or "filter cake" is formed and below which the filtrate is evacuated and gathered, the upper part (9) of the said enclosure (1) being axially traversed by the rod (11) of a piston (5) contained inside, and whose end or head (27) is T-shaped, characterised in that the end or head (27) receives a cylindrical skirt (29), which has a C-shaped cross-section, of planar lower surface, of the diameter of the cylindrical body (7) of the enclosure (1), rotationally secured to the head of the piston by hooking and sliding without friction in the enclosure (1), this skirt (29) being imparted, under the action of drive means (39, 41; 31) acting on the piston rod (11), with a rotational movement and an axial translational movement inside the enclosure, respectively, elements for sensing the rotational torques (43) and translational forces (25) further being associated with the said drive means (39, 41; 31).

3. Measurement cell according to Claim 2, characterised in that the said enclosure (1), a constituent of the measurement cell, is securely and dismantleably mounted on a chassis (3) carrying the said drive means (39, 41; 31) of the piston (5).

4. Measurement cell according to one of Claims 2 and 3, characterised in that it comprises a cylindrical body (7), a bottom plate (13) carrying the said filter element (15) and radially grooved on the face in contact with the filtering element (15) with a central hole (17) for the outflow and evacuation of the filtrate gathered, and an upper support plate (9) secured to the chassis and traversed in a sealed manner by the rod (11) of the said moving piston (5).

5. Measurement cell according to one of Claims 2 to 4, characterised in that the translating drive means of the piston (5) consist of a screw jack (31) with translational guidance using ballbearings (35) sliding on two parallel posts (33) secured to the chassis and framing the rod (11) of the moving piston (5).

6. Measurement cell according to one of Claims 2 to 5, characterised in that the compressive traction force sensor (25) for measuring the contact adherence is placed on the shaft for connecting the piston (5) to the screw jack (31).

7. Measurement cell according to one of Claims 2 to 6, characterised in that the rotation of the piston (5) is ensured by means of a rack (39) meshing perpendicularly on a piston rod toothed shaft portion (37) and actuated in displacement by a dual-acting hydraulic jack (41).

8. Measurement cell according to one of Claims 2 to 7, characterised in that the torque sensor (43) is arranged at the end of the rack (30) between the latter and the hydraulic jack (41).

9. Measurement cell according to one of Claims 2 to 8, characterised in that the application pressure on the disc or the skirt (29) of the moving piston results from actuating the translational drive means or screw jack (31) and from the gas pressure at the heart of the enclosure, which also allows the drilling fluid to be filtered from upstream to downstream of the filter element (15).

10. Application of the measurement cell and of the method according to one of the preceding claims to studying the behaviour, when drilling, of the formations of clay-like nature, to solving the problems of abnormal pressures, characterised in that the test data are used on compacted clay-like cakes of specific nature (close to the nature assumed to exist at the drilling location), these cakes being contained in pellets to be mounted in the bottom of the measurement enclosure instead of the grooved filter or above it, and in that the chemical reactivity of these cakes, and in particular their hydration, is compared to muds of given compositions.

11. Application of the measurement cell and of the method according to one of the preceding claims, characterised in that the problems of the clays sticking to the drilling tools and lining is simulated by measuring the application pressure of the disc on the cake (compacting pressure) at which pressure it begins to be noticeable that the clay sticks to the disc as it reascends.
